# EUROPEAN PATENT APPLICATION

(11) **EP 4 183 503 A1**
(43) Date of publication of application: **24.05.2023**
(21) Application number: 21209471.8
(22) Date of filing: 22.11.2021
(51) Int. Cl.: B22F 10/28, B22F 10/37, B22F 10/85, B22F 12/52, B22F 12/67, B22F 12/90, B29C 64/205, B29C 64/329, B29C 64/393, B33Y 10/00, B33Y 30/00, B33Y 50/02

(54) **POWDER FEEDER FOR 3D PRINTING**

(71) Applicant: Siemens Energy Global GmbH & Co. KG, 81739 München (DE)
(72) Inventor: Avdovic, Pajazit, 60209 Norrköping (SE); Eriksson, Jonas, 61294 Finspong (SE); Fornander, Jerry, 61232 Finspang (SE)

(57) **Abstract**

The present invention refers to a method of 3D printing to manufacture a product, wherein the method of distributing the powder material for a powder bed utilized in the 3D printing process is improved. Furthermore, the present invention refers to a powder feeder utilized to distribute the powder material. Additionally, the present invention refers to a 3D printing device being adapted to be utilized in an inventive method.

## Description

The present invention refers to a method of 3D printing to manufacture a product, wherein the method of distributing the powder material for a powder bed utilized in the 3D printing process is improved. Herein, a modified powder feeder it utilized to distribute the powder in an improved way to improve the overall processing and reliability of the 3D printing. Furthermore, the present invention refers to such modified powder feeder utilized to distribute the powder material. Additionally, the present invention refers to a 3D printing device being adapted to be utilized in an inventive method.

Additive manufacturing is a very flexible method of manufacturing, wherein a product is manufactured by adding material on an existing part or right from the scratch. Herein, 3D printing provides the ability to create whole components from the scratch, wherein the components can be provided with highly sophisticated geometries. It is even possible to manufacture components from highly resistant materials like nickel superalloys to provide highly sophisticated parts for continuous flow engines resisting extreme conditions. During such 3D printing a metal or metal composition powder is melted layer by layer to manufacture a complex 3D structure. Despite the high flexibility provided with such method, certain requirements are still to be considered. Especially for applications demanding a high accuracy was noted that, for example, minor deviations occur despite optimized operating conditions. As the requirements for such manufacturing methods constantly increase, preventing such deviations provides a significant challenge to be solved. A reason for such deviation is an inhomogeneous powder layer to be melted and solidified. However, identifying minor problems of the powder layer at a later step and correcting such problem subsequently becomes difficult at least based on a time perspective as the development of 3D printing reaches a stage that provides a speed being significantly impaired from such additional actions. Thus, there is a need to further improve the provision of the powder layer to enable the application of up-to-date for high quality applications.

These problems are solved by the products and methods as disclosed hereafter and in the claims. Further beneficial embodiments are disclosed in the dependent claims and the further description. These benefits can be used to adapt the corresponding solution to specific needs or to solve further problems.

According to one aspect the present invention refers to a method of 3D printing a powder material utilizing a laser beam or an electron beam to manufacture a product,
wherein the method contains repeated steps of
   - distributing the powder material as layer using a powder feeder, and
   - selectively solidifying the layer of the powder material, wherein the powder feeder scatters the powder material while moving above a powder bed area the selective solidifying of the powder material takes place,
wherein the scattering of the powder material is monitored to detect any inhomogeneity of the scattering of the powder material by means of at least one sensor being attached to the powder feeder,
wherein the at least one sensor monitors the scattered powder material falling down from the powder feeder.

Surprisingly, it was noted that monitoring the scattering of the powder material allows to easily, reliable and time consuming monitoring the quality of the distribution of the powder material. While it should be expected that the, for example, the interaction of the powder particles of the powder material renders such monitoring pretty worthless based on subsequent statistical distribution processes influencing the powder material deposition rendering any deduction too unsecure it was noted that it the corresponding deviations and equalizations of the scattering can be neglected for generic approaches and easily predicted using commonly available statical methods to predict the real distribution of the powder material and problems of the deposited powder material forming the powder material layer. This surprisingly easy and reliable method to detect corresponding problems at an early stage allows to react to such problems at a very early stage and speed up the overall 3D printing process while simultaneously improving the overall quality of the manufactured product.

According to a further aspect the present invention refers to a powder feeder being adapted to be utilized in an inventive method.

According to a further aspect the present invention refers to a 3D printing device being adapted to be utilized in an inventive method.

To simplify understanding of the present invention it is referred to the detailed description hereafter and the figures attached as well as their description. Herein, the figures are to be understood being not limiting the scope of the present invention, but disclosing preferred embodiments explaining the invention further.
Fig. 1 shows a schematic cross-section through a powder feeder distributing the powder material onto a powder bed.
Fig. 2 shows a schematic cross-section through a powder outlet of such powder feeder.
Fig. 3 shows a schematic cross-section through an alternative powder outlet of such powder feeder.
Fig. 4 shows a schematic view of a powder feeder showing a conveyor system inside the powder feeder convey the powder material, wherein the powder material falling down from the powder feeder shows multiple inhomogeneities of the distributed powder material.

According to one aspect, the present invention refers to a supported method as specified above.

It was noted that specific sensors are very suitable for typical applications. According to further embodiments it is preferred that the at least one sensor contains at least one optical sensor, preferably an optical fiber Bragg grating sensor (FBG), or a laser diffraction based sensor. It was noted that corresponding sensors are very suitable to monitor the scattering of the powder as they provide a very good balance of reliability and sensor data quality to provide the required data for typical systems.

Furthermore, it was noted that the inventive method is very suitable for highly sophisticated application utilizing highly durable powder materials. According to further embodiments it is preferred that the powder material consists of at least 90 wt.-%, more preferred at least 95 wt.-%, even more preferred at least 99 wt.-%, of a metal or a metal alloy, preferably a nickel superalloy. Corresponding powder materials are typically utilized for high quality applications and require a highly reliable distribution to provide the intended properties of the manufactured products.

For typical applications it is preferred to include a classification system. According to further embodiments it is preferred that the method contains the step of classifying the detected inhomogeneity of the scattering of the powder material are automatically classified according to the potential severity of damages of a product resulting from the 3D-printing utilizing the powder layer containing the detected inhomogeneity. Corresponding system easily outweigh the misfit of additional processing power to allow an easy evaluation and also review of the corresponding data. This is surprisingly beneficial as, for example, the human experience can be very easily utilized based on such classification and experienced estimation of the resulting output. Such method can be utilized to train a corresponding system to automize a corresponding system even on the short term to significantly improve such 3D printing method.

Herein, it is typically preferred that the method takes into account a subsequent recoater movement. According to further embodiments it is preferred that the method contains the step of adjusting the classifying the detected inhomogeneity of the scattering of the powder material by including powder movement of the powder material resulting from a recoater blade subsequently moving over the surface of the powder material. It was noted that corresponding equalizations of the powder material layer of the provided powder bed can be easily predicted. This allows to prevent unnecessary replacements of the distributed powder material based on inhomogeneities of the powder material layers that are compensated during the movement of such recoater blade.

Including data from a database including the required characteristics of the products can also be utilized to further improve the inventive method. According to further embodiments it is preferred that the method contains the step of retrieving data with regard to specifications of the product from a database, wherein the method contains the step of evaluating a detected inhomogeneity of the scattering of the powder material whether this potentially results in the characteristics of the product not fulfilling the requirements anymore. Including the real requirements of the intended product allows to efficiently prevent losses originating from minor defects not influencing the properties of the resulting products in a manner being significant enough to really render the product problematic. It was noted that such apparently simple step provides a huge benefit as the data of the inventive method can be utilized to evaluate such impact and prevent a significant loss of the products at an early stage. Correspondingly adapted 3D printing devices providing corresponding interfaces and processing units to execute such evaluations are significantly superior over existing 3D printing devices not providing such adaption.

A further beneficial embodiment that can be realized utilizing the inventive method is based on the provision of a specialized data structure product for a manufacture product. According to further embodiments it is preferred that a data structure product relating to the product is created, wherein the data structure product contains data regarding at least one inhomogeneity being detected during distributing the powder material, wherein the part of the layer of the powder material containing the inhomogeneity of the distributed powder material became part of the product based on the selectively solidifying of the layer of the powder material. Corresponding data structure products allow to provide detailed insight into potential problems of manufactured products. For example, taking into account the constantly improving demands referring to gas turbine parts render it important to keep more detailed data with regard to corresponding product allowing to reevaluate the potential utilization of corresponding products under increased strain of future applications. Therefore, providing such data structure product allows to significantly improve the utilization of such products.

Herein, it is further beneficially utilized to step away from a point based view to a more generic view. According to further embodiments it is preferred that a data structure product relating to the product is created, wherein the data structure product contains data regarding at least one inhomogeneity being detected during distributing the powder material, wherein the method contains the steps of
- detecting at least one lack of powder material and at least one excess of powder material resulting from inhomogeneities of the scattering of the powder material,
- evaluating whether the at least one lack of powder is at least partially compensated by the at least one excess of powder based on a recoater blade subsequently moving over the surface of the powder layer,
- evaluating the potential severity of damages of a product resulting from the 3D-printing utilizing the powder layer containing the detected inhomogeneity taking into account the at least partial compensation of the at least one lack of powder by the at least one excess of powder. Corresponding data structure products further increase the insight in the resulting product. Surprisingly, it was noted that the increased processing power and further resources invested are well spent and provide an improved overall benefit based on the increased insight over the long run.

Additionally, it can be preferred to include an automatic powder redistribution step. According to further embodiments it is preferred that the method includes a step of evaluating the potential inhomogeneity, wherein the inhomogeneity is identified to potentially impair the functionality of a product resulting from the 3D-printing utilizing the powder layer containing the detected inhomogeneity, wherein the method includes automatically removing the scattered powder layer including the inhomogeneity and repeating the step of distributing the powder material as layer using a powder feeder before the selective solidification of the powder layer takes place. Providing the inventive method with such automatic powder redistribution step allows to very early detect problems and directly provide a replacement layer to remove corresponding problems.

While it is possible to detect excess powder material as well as a lack of powder material being scattered it was noted that especially a lack of powder material can be beneficially detected and utilized for typical applications utilizing the inventive method. According to further embodiments it is preferred that the method includes detecting a lack of powder material being scattered by the powder feeder resulting in an inhomogeneity. Corresponding problems can be very efficiently identified and quantified to identify inhomogeneities and prevent later problems. Concentrating on such problems allows to minimize the potentially required processing power also in case a plurality of corresponding problems occur in a small time window. Simultaneously, these problems represent the most problematic cases as they typically cannot be removed by recoater blades or other equalizations steps that are implemented in 3D printing devices.

According to a further aspect the present invention refers to a powder feeder being adapted to be utilized in an inventive method.

It was noted that the sensor can be placed at a plurality of locations, but specific locations might be preferred for typical applications. According to further embodiments it is preferred that the powder feeder contains an oblong hole being adapted to be utilized to distribute the powder material, wherein the at least one sensor is located on the side of a recess containing the oblong hole or on the lower surface of the powder feeder below the oblong hole. It was noted that locations can be utilized for many 3D printing devices and provide reliable insight in the scattering of the powder. Placing the sensor in such recess surprisingly provides a detailed and reliable insight. Simultaneously, it is surprisingly noted that no significant dirtying of the sensor took place allowing to provide high surface intervals. Placing the sensor of the lower surface of the powder feeder typically provides a lower amount of detailed data regarding the scattered powder, but service, replacement and cleaning steps are significantly simplified. Especially, in case of application resulting in an easy dirtying of the sensor such placement is to be preferred.

To further increase the functionality of the inventive powder feeder a recoater blade can be directly attached to the powder feeder. According to further embodiments it is preferred that the powder feeder provides a recoater blade leveling a surface of the powder material being scattered by the powder feeder. Corresponding powder feeders can directly smoothen the surface of the distributed powder layer saving significant time as the integrated sensor is able to directly acquire the relevant data with regard to quality of the scattered powder that might otherwise be hidden by the movement of the recoater blade. Especially, in cases in which the sensor is placed on the lower surface of the powder feeder this additionally provides the benefit that such recoater blade can also be utilized as background for the sensor to improve the quality of the sensor data.

According to a further aspect the present invention refers to a 3D printing device being adapted to be utilized in an inventive method.

According to further embodiments it is preferred that the 3D printing device is a selective laser melting device. Corresponding 3D printing devices are typically very suitable to utilize the inventive method without major changes of the available hardware and software.

Furthermore, it was noted that corresponding 3D printing devices can be beneficially provided with interfaces to further improve their functionality. According to further embodiments it is preferred that the 3D printing device contains an interface being adapted to continuously send data regarding a detected inhomogeneity to a remote database, preferably a distributed database. Providing such improved 3D printing devices, for example, allows to make best use of externally located expertise. This is surprisingly beneficial to evaluate such inhomogeneities and predict the outcome of manufacturing a product from a corresponding powder bed.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

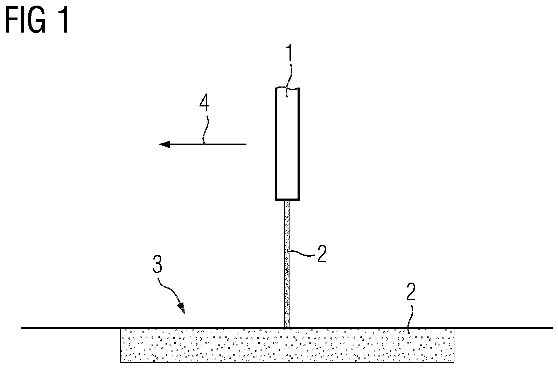

Figure 1 shows a schematic cross-section through a powder feeder 1 distributing the powder material 2 onto a powder bed 3. Herein, the schematically indicated powder feeder 1 is moving over the printing area of the 3D printer containing the powder bed 3, wherein the 3D printer utilizes a laser beam to melt the powder material 2 being a metal alloy like a nickel superalloy. The distance of the powder feeder 1 and the powder bed 3 has been increased to simplify the understanding of the method.

The powder feeder 1 moves in direction 4 and the opposing direction 4 while distributing powder material 2. Said distributed powder material 2 provides layers that are deposited within the 3D printing area before it is selectively melted and solidified. Herein, the steps of providing such powder material 2 layers and selectively melting and solidifying the melted powder material 2 is repeated to layerwise manufacture the product.

The scattering of the powder is monitored using a sensor of the powder feeder 1. Herein, the sensor is located at the bottom of the powder feeder 1 in an opening containing the powder outlet through which the powder material 2 falls down onto the 3D printing surface. Said sensor being a Bragg grating sensor detects inhomogeneities of the scattering of the powder material 2 resulting in an uneven thickness of the deposited powder layer.

Such inhomogeneities are automatically classified according to the potential severity of damages of a product manufactured by such 3D printing in case the powder layers containing the detected inhomogeneities are utilized for printing. Herein, the evaluation includes equalizations of the powder layer originating from the movement of a recoater blade over the distributed powder layer. Herein, the movement of the recoated blade is taken into account as well as the positions of locations of a lack as well as an excess of powder material 2 that was distributed. Herein, based on the movement of such recoater blade a lack of powder material 2 can be partially compensated by the moving recoater blade rendering the overall resulting powder layer still satisfying for the intended purpose. Such compensation can be surprisingly easy evaluated before the recoater blade moves across the powder layer. Allowing to save the time of the moving of the recoater blade in case a removal of the powder layer is determined to be required and directly take action. Resulting in a significantly reduced manufacturing time including correcting non satisfying powder layers.

Optionally the controls of the 3D printing device can be utilized to retrieve data with regard to specifications of the product from a database. Said data can be utilized to evaluate a detected inhomogeneity of the scattering of the powder material 2 whether this potentially results in the characteristics of the product not fulfilling the requirements anymore. This allows to further improve the insight in the severity of corresponding inhomogeneities and whether an action is required. Significantly reducing the required effort compared to take action indifferently to the specific requirements that might render even sever problems located at less important locations irrelevant.

In case an inhomogeneity is identified potentially impairing the functionality of a product manufactured by the 3D printer and containing the inhomogeneity the method contains an automatic correction step. Herein, the powder layer containing the inhomogeneity is removed automatically and a new powder layer is distributed using the powder feeder 1. Allowing to let such 3D printing process to run automatically without the need to take eventual correcting actions.

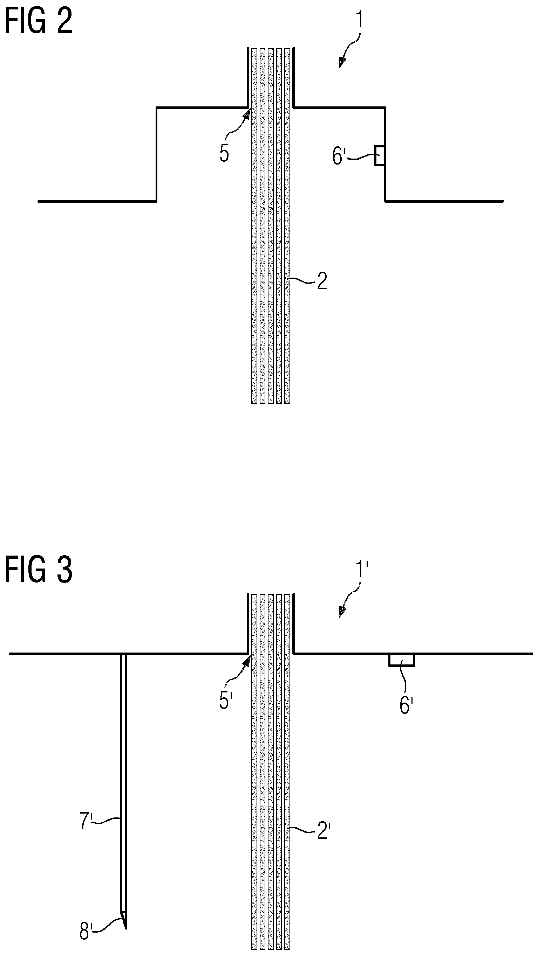

Figure 2 shows a schematic cross-section through a powder outlet of such powder feeder 1. Herein, the powder feeder 1 contains an oblong hole 5 being shown in a cross section perpendicular to the direction of the oblong hole 5 extends to. The powder material 2 falls out of the oblong hole 5 and through the recess containing the oblong hole 5 and a sensor 6 on the side of the recess. While the powder material 2 falls through the recess the sensor 6 monitors the scattering of the powder material 2 and identifies inhomogeneities within the scattered powder.

Figure 3 shows a schematic cross-section through an alternative powder outlet of such powder feeder 1'. Herein, the oblong hole 5' the powder material 2' flows through is located at the bottom of the powder feeder 1'. In contrast to the powder feeder 1' as shown in figure 2 a sensor 6' monitoring the scattering of the powder is located on the lower surface. On the opposite side of the oblong hole 5' a recoater blade 7' is located. Said recoater blade 7' contains a recoater tip 8' being flexible and allowing to provide a smooth surface of the powder layer the recoater blade 7' passes by. Furthermore, the main part of the recoater blade 7' allows to provide a background for the sensor 6' to further improve the monitoring of the scattering of the powder material 2'.

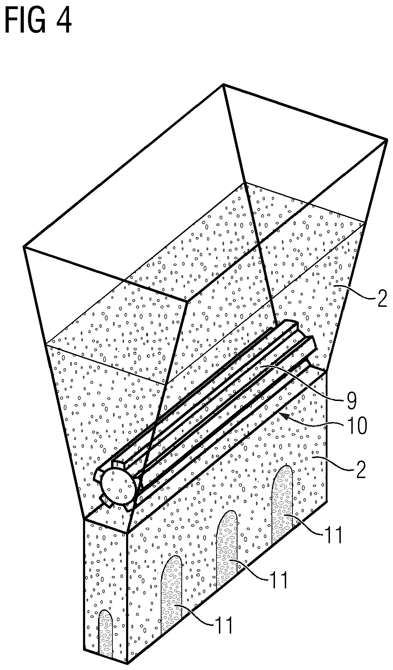

Figure 4 shows a schematic view a powder feeder showing a conveyor system inside the powder feeder conveying the powder material 2, wherein the powder material 2 falling down from the powder feeder shows multiple inhomogeneities of the distributed powder material 2. The schematic powder material 2 container at the top contains a conveyor roller 9 forwarding the powder material 2 to the outlet located at the bottom of the powder feeder. The conveyed powder material 2 passes a distribution unit 10 homogenizing the flow of the powder material 2.

The scattered powder material 2 falling down passes the sensor not shown in figure 4 identifying the inhomogeneities 11 of the scattered powder material 2 being a lack of powder material 2 in this area of the part of the stream of scattered powder material 2. Herein, the borders of the powder stream are schematically indicated by the lines along the powder stream resulting from the powder material 2 passing the distribution unit 2. Also, merely schematically the areas containing the inhomogeneities 11 are indicated by the lines specifying areas of the powder stream containing such lack of powder material 2. Resulting from this lack of powder material 2 the resulting powder layer only provides a too low amount or even no powder material 2 at certain spots. It has to be noted that the figure as shown is simplifying such powder stream providing such inhomogeneities 11 in any possible shape being created spontaneously, repeatedly or continuously. For example, such repeated or continuous inhomogeneities 11 can result from some damage of the conveyor roller 9 or the distribution unit 10.

The present invention was only described in further detail for explanatory purposes. However, the invention is not to be understood being limited to these embodiments as they represent embodiments providing additional benefits to solve specific problems or fulfilling specific needs. The scope of the protection should be understood to be only limited by the claims attached.

## Claims

1. Method of 3D printing a powder material (2, 2') utilizing a laser beam or an electron beam to manufacture a product,
wherein the method contains repeated steps of
- distributing the powder material (2, 2') as layer using a powder feeder (1, 1'), and
- selectively solidifying the layer of the powder material (2, 2'),
wherein the powder feeder (1, 1') scatters the powder material (2, 2') while moving above a powder bed (3) area the selective solidifying of the powder material (2, 2') takes place,
wherein the scattering of the powder material (2, 2') is monitored to detect any inhomogeneity (11) of the scattering of the powder material (2, 2') by means of at least one sensor (6, 6') being attached to the powder feeder (1, 1'),
wherein the at least one sensor (6, 6') monitors the scattered powder material (2, 2') falling down from the powder feeder (1, 1').

2. Method according to claim 1, wherein the at least one sensor (6, 6') contains at least one optical sensor (6, 6'), preferably an optical fiber Bragg grating sensor (6, 6') (FBG), or a laser diffraction based sensor (6, 6').

3. Method according to any of claims 1 to 2, wherein the powder material (2, 2') consists of at least 90 wt.-% of a metal or a metal alloy, preferably a nickel superalloy.

4. Method according to any of claims 1 to 3, wherein method contains the step of classifying the detected inhomogeneity (11) of the scattering of the powder material (2, 2') are automatically classified according to the potential severity of damages of a product resulting from the 3D-printing utilizing the powder layer containing the detected inhomogeneity (11).

5. Method according to any of claims 1 to 4, wherein the method contains the step of adjusting the classifying the detected inhomogeneity (11) of the scattering of the powder material (2, 2') by including powder movement of the powder material (2, 2') resulting from a recoater blade (7') subsequently moving over the surface of the powder material (2, 2') .

6. Method according to any of claims 1 to 5, wherein the method contains the step of retrieving data with regard to specifications of the product from a database,
wherein the method contains the step of evaluating a detected inhomogeneity (11) of the scattering of the powder material (2, 2') whether this potentially results in the characteristics of the product not fulfilling the requirements anymore.

7. Method according to any of claims 1 to 6, wherein a data structure product relating to the product is created, wherein the data structure product contains data regarding at least one inhomogeneity (11) being detected during distributing the powder material (2, 2'),
wherein the part of the layer of the powder material (2, 2') containing the inhomogeneity (11) of the distributed powder material (2, 2') became part of the product based on the selectively solidifying of the layer of the powder material (2, 2').

8. Method according to any of claims 1 to 7, wherein a data structure product relating to the product is created, wherein the data structure product contains data regarding at least one inhomogeneity (11) being detected during distributing the powder material (2, 2'),
wherein the method contains the steps of
- detecting at least one lack of powder material (2, 2') and at least one excess of powder material (2, 2') resulting from inhomogeneities (11) of the scattering of the powder material (2, 2'),
- evaluating whether the at least one lack of powder is at least partially compensated by the at least one excess of powder based on a recoater blade (7') subsequently moving over the surface of the powder layer,
- evaluating the potential severity of damages of a product resulting from the 3D-printing utilizing the powder layer containing the detected inhomogeneity (11) taking into account the at least partial compensation of the at least one lack of powder by the at least one excess of powder.

9. Method according to any of claims 1 to 8, wherein the method includes a step of evaluating the potential inhomogeneity (11),
wherein the inhomogeneity (11) is identified to potentially impair the functionality of a product resulting from the 3D-printing utilizing the powder layer containing the detected inhomogeneity (11),
wherein the method includes automatically removing the scattered powder layer including the inhomogeneity (11) and repeating the step of distributing the powder material (2, 2') as layer using a powder feeder (1, 1') before the selective solidification of the powder layer takes place.

10. Method according to any of claims 1 to 9, wherein the method includes detecting a lack of powder material (2, 2') being scattered by the powder feeder (1, 1') resulting in an inhomogeneity (11).

11. Powder feeder (1, 1') being adapted to be utilized in a method according to any of claims 1 to 10.

12. Powder feeder (1, 1') being according to claim 11, wherein the powder feeder (1, 1') contains an oblong hole (5, 5') being adapted to be utilized to distribute the powder material (2, 2'),
wherein the at least one sensor (6, 6') is located on the side of a recess containing the oblong hole (5, 5') or on the lower surface of the powder feeder (1, 1') below the oblong hole (5, 5').

13. 3D printing device being adapted to be utilized in a method according to any of claims 1 to 10.

14. 3D printing device according to claim 13, wherein the 3D printing device is a selective laser melting device.

15. 3D printing device according to claim 14, wherein the 3D printing device contains an interface being adapted to continuously send data regarding a detected inhomogeneity (11) to a remote database, preferably a distributed database.
